(19) Europäisches Patentamt
European Patent Office
Office européen des brevets

(11) Publication number: **0 065 567**
**B1**

(12) # EUROPEAN PATENT SPECIFICATION

(45) Date of publication of patent specification: **26.06.85**

(51) Int. Cl.$^4$: **G 08 C 21/00**

(21) Application number: **82900179.1**

(22) Date of filing: **30.11.81**

(86) International application number:
**PCT/US81/01581**

(87) International publication number:
**WO 82/02106 24.06.82 Gazette 82/16**

(54) **TOUCH POSITION LOCATING SYSTEM.**

(30) Priority: **08.12.80 US 214174**

(43) Date of publication of application:
**01.12.82 Bulletin 82/48**

(45) Publication of the grant of the patent:
**26.06.85 Bulletin 85/26**

(84) Designated Contracting States:
**DE FR**

(56) References cited:
**WO-A-82/02107**
**US-A-3 618 019**
**US-A-3 657 475**
**US-A-3 662 377**
**US-A-4 121 049**
**US-A-4 145 748**

**"One-Point Touch Input of Vector Information for Computer Displays", HEROT, COMPUTER GRAPHICS (US), August 1978, pages 210-216**

(73) Proprietor: **Western Electric Company, Incorporated**
**222 Broadway**
**New York, NY 10038 (US)**

(72) Inventor: **DeCOSTA, J.**
**92 Buckingham Drive**
**Jackson, NJ 08527 (US)**
Inventor: **MALLOS, James Basil**
**252B Harding Road**
**Freehold, NJ 07728 (US)**
Inventor: **ROE, David Bjorn**
**9 Hill Road**
**Lincroft, NJ 07738 (US)**

(74) Representative: **Buckley, Christopher Simon Thirsk et al**
**Western Electric Company Limited 5**
**Mornington Road**
**Woodford Green Essex IG8 OTU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 065 567 B1

## Description

This invention relates to systems for determining the location of a localized force applied to a surface, e.g. of a visual display.

In the use of interactive computers, a computer terminal having a visual display presents a plurality of alternative choices on the display. The user selects one desired alternative by touching or tapping the display at a location corresponding to the desired alternative. The computer terminal identifies the position of the touch and reacts accordingly.

U.S. Patents 3,657,475 and 4121049 each disclose a system for determining the location of a localized force applied to a surface, including a plurality of force sensing devices adapted to be associated with the surface, each sensing device serving to translate forces at its location into proportional electrical signals, and coupling means for providing output signals from the proportional electrical signals. When a localized force is applied to the surface, the force sensing devices provide a processing unit with electrical signals which are proportional to the localized force. The processing system calculates the coordinates of the location of the localized force. Equations from the laws of statics are employed, namely, that the sum of the moments about an axis equals 0.

In one embodiment described in U.S. patent 3657475 an integrator collects force sensing device data, so that both the static and low frequency dynamic characteristics of the touch are provided to the processing unit for calculating the coordinates of the localized force. However, the static forces due to the weight of the surface are not separated from the dynamic characteristics of the applied touch, and this presents an admitted problem. The patent discloses that in a second, preferred embodiment of the invention the dynamic characteristics of the touch are analyzed. However, it is not clearly disclosed how the dynamic characteristics of the touch are separated from the static characteristics.

U.S. Patent No. 4,121,049 discloses a threshold comparator amplifier for ensuring that the applied touch is above a predetermined threshold level. A shortcoming of the use of the comparator amplifier is that the predetermined threshold level does not automatically adapt to the environment or the quiescent state orientation of the surface. For example, if the surface is rotated from a vertical to a more horizontal orientation, the weight of the surface causes a corresponding increase in the force detected by the force detectors. As a result, the threshold level must be manually increased to compensate for the increased stress.

According to this invention a system for determining the location of a localized force applied to a surface includes a plurality of force sensing devices adapted to be associated with the surface, each sensing device serving to translate forces at its location into proportional electrical signals, and coupling means having a bandpass filter characteristic for deriving from the proportional electrical signals output signals in which the common dynamic characteristics of the range of forces anticipated to be applied to the surface are accentuated.

The system may include means for establishing, prior to each touch, average reference signal levels representative of a quiescent state of the force sensing devices.

Brief description of the drawings

Fig. 1 shows one touch force sensing mechanism which may be used with the present invention;

Fig. 2 is a graphical representation of the Force vs. Time characteristics of several types of touches impinging upon a rigid body.

Fig. 3 shows the Gain vs. Frequency (dynamic transfer) characteristics of a coupling circuit which may be used with the present invention.

Fig. 4 shows the Voltage vs. Time characteristics of a long and a short touch measured at the output of a coupling circuit.

Fig. 5 is a schematic drawing of a dynamic position locating system according to the invention.

Fig. 6 shows a programmable keyboard display.

Fig. 7 is a flowchart of a subroutine for automatically calculating new reference values during a quiescent period.

Fig. 8 is a flowchart of a subroutine for detecting the beginning of a touch.

Figs. 9 and 10 comprise a flowchart of a subroutine for computing the x, y coordinates of a touch.

Detailed description

With reference to Fig. 5, an illustrative embodiment of the invention is shown which comprises several devices 501 for detecting a touch force applied against a touch plate such as the one shown in Fig. 6. In general, each device 501 generates an analog signal in response to the touch, which signals are passed through an alternating current coupling unit 508 which reshapes the analog signals to more suitable form for detection and analysis. A multiplexer 510 sequentially collects the outputs from the coupling units 508, and samples of these outputs are taken, under the control of a clocking and sample request circuit 511, and applied to an analog to digital converter 504 for digitizing the signal samples. The digital signals are applied to the processing unit 512 which analyzes the signals, detects the location of the touching force, and provides further instructions to the display unit via the control unit 514.

Various components of the Fig. 5 system are now further discussed.

With reference to Fig. 1, an example of one type of touch detecting arrangement is discussed. The surface 101a to be touched is part of a plate 101 mounted on a rigid support 107 by means of a spring 108 and a mounting arrangement 104—

105. Preferably, at least three such mounting arrangements are used so that triangular support is provided to a touch plate 101 of the touch sensitive position locating system. The rigid support 107 can be a visual display device, e.g., the face plate of a cathode ray tube.

The mounting arrangement comprises a pointed member 104 and a receiving member 102 for receiving the point of the pointed member. A force sensing member 105, e.g., a piezoelectric transducer, joined to the pointed member detects a perpendicular component force $F_1$ caused by the weight of touch plate 101, the spring 108, and by a localized, directional force F applied at a point M by the user of the apparatus. This and other mounting arrangements are the subject of our application EP—A—0065568, published as WO—A—82/02107 on 24.06.1982 and claiming a priority date of 08.12.1980.

Electrical access leads 109 are connected to members 104 and 106 which comprise a conductive material. When no force F is applied by a user to surface 101a, a static force is detected which is proportional to the weight of the touch plate 101 and to the tension of the spring 108. When a dynamic touch force F is applied to the surface 101a of touch plate 101, the detected force $F_1$ proportionately changes with the applied force F.

As is generally known, the x,y coordinates of the point of application M of localized force F are calculated by detecting the perpendicular components of the force F through the force sensing members 105 of the mounting arrangements. Equations from the laws of statics are employed, namely that the sum of the moments about a point must equal zero. As the locations of the mounting arrangements are known and all the forces are detected, two moment arm equations are solved for the x,y coordinates, respectively, of the point of application M using an associated computer processing system.

Other force detecting means, such as the various ones shown in the aforecited references can be used.

The purpose of the alternating current coupling units 508 is to filter the analog signals generated by the force detecting units 501 to better facilitate detection and validation, of anticipated types of forces. Referring to Fig. 2, for example, a graphical representation of the Force vs. Time characteristics of several types of touches is shown. Curves 201—204 represent, respectively, a sharp tap; a fingertip tap; a slow, hard tap; and a light push, respectively, and are representative of the variety of touches that a user of the present system may be expected to apply to touch surface 101a of Fig. 1.

The sharpest of taps 201 to the surface 101a of touch plate 101 may cause a one to five millisecond force spike. On the other hand, a light push 204 may register a nearly constant force of as much as two seconds duration. The various touch forces cause a mechanical vibration of the touch plate 101, and the output of each sensing device 501 is a rather complicated a.c. signal dependent upon the particular touch force applied.

The dynamic response characteristic of the coupling units is selected to accentuate the common frequency and magnitude characteristics of the a.c. signals from the sensing devices 501 thereby making possible more positive analysis of the touch signals. Referring to Fig. 3, the dynamic response characteristic 301 of one such coupling unit is shown. The high frequency roll-off of curve 301 above 8 Hz attenuates the high frequencies of the sharp tap 201. The low frequency roll-off below 8 Hz rejects the static or direct current components and attenuates the low frequency components of the light push 204.

Referring to Fig. 4, graphical representations of the Voltage vs. Time characteristics resulting from the light push 204 and the sharp tap 201 of Fig. 2 at the output of the coupling unit are shown. Curve 401 corresponds to the sharp tap 201 and comprises a simple damped sine wave having a period of about 175 milliseconds, thus allowing a plurality of samples 401a thereof to be taken.

Curve 402 represents the light push. It exhibits two periods when samples can be taken: when the light push first occurs and, at 2000 milliseconds, when it is released.

Analysis has shown that all types of touches 201—204 exhibit more similar characteristics after passing through such a coupling unit. This allows more positive identification of the touch forces as well as better rejection by the system of false touch forces generated by various "noise" factors, e.g., floor vibrations.

For the sharp tap curve 401, sampling (in accordance with known analog to digital conversion processes) ceases at the time of the second zero crossing 403. Two half cycles of valuable data are collectible before the signal is damped below useful levels. With respect to the light push curve 402, sampling ceases after a predetermined time interval 404 expires, for example, 200 milliseconds. It is not practical to await the release period of the light push curve 402 to acquire the second (after 2000 milliseconds) damped wave of samples.

Referring briefly to Fig. 10, a subroutine for computing the touch coordinates x,y is presented in flowchart form. Boxes 1001, 1012, 1013, 1014, and 1021 show that sampling ceases either at the second zero crossing or after a predetermined time interval, whichever event occurs first.

Coupling unit 508 comprises several component circuits. In the depicted embodiment, component filter stages 503 and 505 provide the low frequency (less than 8 Hz) roll-off characteristics 503a and 505a, respectively, presented in Fig. 3. Curves 503a and 505a combine to form the low frequency characteristics of curve 301. Component filter stages 504 and 506 provide the high frequency roll-off characteristic curves 504a and 506a. Amplifier 507 provides gain and impedance matching to the signal recovered from force sensing device 501. In general, any characteristic curve 301 may be employed so long as 1) the associated coupling unit is able to match impedances between the force sensing device and the computer processing system employed and 2) the characteristic curve 301 accentuates the common dynamic characteristics of the variety of touches that impinge on the touch surface of the position locating system. Table A provides values for the components of the depicted coupling unit 508, including the electrical components of filter stages 503, 504, 505, and 506, for use with piezoelectric transducer elements 501.

TABLE A
Component values for the alternating current coupling circuit 508 of Fig. 5

| | | |
|---|---|---|
| | R503 | C503 |
| Filter 503 | 2.7Mohm | 7150pf |
| | R504 | C504 |
| Filter 504 | 1Mohm | 7150pf |
| | R505 | C505 |
| Filter 505 | 22.1Kohm | 1.47Mf |
| | R506 | C506 |
| Filter 506 | 10.5Kohm | 0.511Mf |

As previously noted, multiplexer 510 is employed to sequentially collect samples from the plurality of alternating current coupling units 508. A clocking and sample request circuit 511 of processing system 512 addresses multiplexer 510 to collect an analog sample from the addressed force sensing device 501. The sampling rate is chosen to be much higher than the highest rate at which sample touches may enter the system. Two leads 511a and 511b are shown for this purpose which assumes a maximum of four addressable force sensing devices 501.

The analog samples are provided to the processing system 512 through a known type of analog to digital converter 504. Accordingly, digital samples are provided to the calculating circuit 512a which is also of known type.

In the depicted dynamic position locating system, constant voltages caused by the weight of the touch plate or the tension of the spring are eliminated by the choice of a piezoelectric transducer having a known capacitive equivalent circuit and of the resistor R503. There remains a requirement, however, to determine a reference level of the electrical signal proceeding from each force sensing device through the alternating current coupling unit during a quiescent period. Variations in the particular characteristics of the individual force sensing devices, the alternating current coupling circuit and other components of the system, effects due to aging and temperature, and other environmental effects are compensated for by employing the calculating circuit 512a and an associated software subroutine.

Normalizing of the system occurs when power is provided to the system and after each successive touch. Processing unit 512 responsive to an algorithm stored in permanent memory 512b calls for several electrical samples of forces detected by the plurality of force sensing devices 501. The samples are accumulated in temporary memory 512b. The plurality of collected samples for each force sensing device 501 is then averaged in order to establish an average reference voltage level for each force sensing device.

Referring to Fig. 8, a flowchart of the subroutine for calculating new average reference levels during a quiescent period is presented. In boxes 801—809, thirty-two samples of three force sensing devices 501 are separately accumulated, averaged, and stored. The effect of this is to establish three average reference levels from which to measure the dynamic voltages caused by a touch. In box 807, if a given sensor sample falls outside a narrow range around the first collected sensor sample, the processor 512 restarts the collection process. This ensures that the average reference levels are established during a quiescent period.

Referring to Fig. 9, a flowchart of a subroutine for detecting the beginning of a touch is presented. From boxes 901—906, it is seen that a subsequent touch begins when the sum of the sampled voltages from all force sensing devices 501 minus the sum of their respective average reference levels is greater than a predetermined threshold value. The predetermined threshold value is chosen by considering the effects of noise signals generated by such forces as floor vibrations or moving or accidental tapping of the system. The establishment of this predetermined threshold and the average reference level established for each force sensing device is similar to requiring that the total force measured by the force sensing devices be greater than a threshold value provided to a single comparator amplifier. However, an advantage of this is that the threshold value is unaffected by changes in environment or by static forces detected by the system.

Referring to Fig. 10 and 11, a subroutine for computing the x,y coordinates of the point of touch is presented. In box 1008 the quiescent period average reference level for each force sensing device is digitally subtracted from the sampled voltage level for that sensor as the samples are collected and stored in temporary memory 512b. These adjusted sample values represent the reactionary component forces caused by the momentary, localized force F.

At box 1009 the sum of adjusted sensor sample values for each force sensing device and the sum of the adjusted sensor sample values for all of the sensing devices are accumulated in memory 512b. At box 1016 these sums are averaged by dividing by the number of samples collected. In this manner, an average adjusted sample value is acquired for each force sensing device as well as an average value of their sum.

The processing unit 512 also monitors the touch force values detected by the force sensing devices. If a touch force which is too high (too hard) is detected, corrective action is taken. If the touch force is too soft, that is, momentarily exceding the predetermined threshold but not remaining above that level for very many samples, corrective action is also taken.

If the forces detected are so large (boxes 1003 and 1004) that the range of the analog to digital converter 504 is exceeded, the processor 512 receives a saturated, full-scale signal. Upon receipt of this signal, the processor enters a mode comprising box 1005 in which all force sensing devices 501 are sequentially polled as before, but the sampled data is not averaged into the cumulative total. The sole function of the sampling in this mode is to wait until the forces detected by each of the force sensing devices return to acceptable levels. At that time, the normal mode of sampling and averaging resumes as in the path comprising boxes 1004, 1007, and 1008.

Accordingly, at the very peak of an applied force that is "too hard", the processor 512 ignores the data because the linear range of the analog to digital converter 504 is exceeded. However, a determination of the coordinates of the touch is still made based on the data collected before the touch force exceeds the maximum range and after it has decreased again below the maximum range. This coordinate calculation is less accurate than with a proper touch force, however. Therefore, at box 1006 a "too hard" flag is set; and at box 1018, display control unit 514a is activated to warn the user not to touch the touch surface so hard. Display control 514a may provide both an audible tone and a visual indication, "TOO HARD". This warning occurs before any action resulting from interpretation of the coordinates of the touch. Shortly after the warning, the user requested action may be performed.

Occasionally, a user touches the screen so lightly that the peak of the detected force signal barely exceeds the predetermined threshold for the beginning of touch, then the signal falls quickly back to zero. In this case, there is so little data available from which to calculate the coordinates that the accuracy of the calculations are impaired by quantization and signal noise.

To prevent coordinate calculations with large errors from being misinterpreted, touches soft enough to cause problems are treated specially. At box 1023 the user may be warned as with a hard touch that his touch is too soft. An alternative solution is to ignore soft touches of short duration entirely. The natural response is to hit the touch sensitive display harder, which is, in this case, desirable. In one arrangement, soft touches that are long enough to provide noise immunity are accepted (a sufficient number and magnitude of samples above the threshold are acquired), but shorter soft touches are rejected. This provides a greater range of acceptable touches than the threshold techniques in the prior art.

At box 1009, the soft touch rejection is performed by accumulating the sample magnitudes for all force sensors. At boxes 1010 and 1011, the accumulated sum is then compared with a predetermined minimum threshold for calculation of coordinates.

By applying a multiplexer 510 to sequentially collect samples, an error is introduced to a given series of samples because all the samples are not collected simultaneously. This error is minimized by the rapid collection, as shown in Fig. 4, of a plurality of samples 401a. Furthermore, because the effects of quantization error and noise on the sampled signal is reduced by collecting many samples, this technique provides inherently more accurate calculations of the coordinates of the touch than would occur if only one simultaneous series of samples is collected.

The above-described sampling method is representative of what is known as a serial collection of data. A parallel collection of samples and the elimination of the multiplexer is achieved by providing additional analog to digital converters between the coupling units 508 and the processing unit 512.

**Claims**

1. A system for determining the location of a localized force applied to a surface, including a plurality of force sensing devices (501) adapted to be associated with the surface, each sensing device serving to translate forces at its location into proportional electrical signals, and coupling means (508) for providing output signals from the proportional electrical signals, characterised by the coupling means having a bandpass filter characteristic whereby the common dynamic characteristics of the range of forces anticipated to be applied to the surface are accentuated in the output signals.

2. A system as claimed in claim 1 including a processing system (512) for determining from the output signals the coordinates of the point of application of the localized force.

3. A system as claimed in claim 2 wherein the processing system includes a sample collection circuit (510 and 511) for collecting output signal samples during application of the localised force.

4. A system as claimed in claim 3 wherein the sample collection circuit serves to collect the samples at a rate much higher than the highest rate at which the localized force may be repeatedly applied to the surface, to minimize the effects of quantization error and noise.

5. A system as claimed in claim 3 or 4 wherein the sample collection circuit serves to collect samples during application of the localized force either until a particular interval of time expires or until a particular zero crossing of the output signal is detected, whichever event occurs first.

6. A system as claimed in claim 2, 3, 4 or 5 wherein the processing system includes a calculating circuit (512a) for calculating average reference levels for each force sensing device, and a memory (512b) for temporary storage of those average reference levels.

7. A system as claimed in claim 6 wherein the average reference levels represent a quiescent state of the force sensing devices.

8. A system as claimed in claim 7 wherein the calculating circuit serves to establish new average reference levels for each force sensing device prior to the application of the localized force.

9. A system as claimed in claim 6, 7 or 8 including a multiplexer circuit (510) for collecting signal samples representative of the output of each force sensing device, and an analog to digital converter (504) responsive to output from the multiplexer circuit for converting the samples to a digitized output, the calculating circuit (512a) serving to average the digitized output before calculating the coordinate values of the point of application of the localized force.

**Patentansprüche**

1. System zur Bestimmung des Ortes einer lokalisierten, auf eine Fläche ausgeübten Kraft mit einer Vielzahl von der Fläche zugeordneten Kraftsensoren (501), die je zur Umsetzung von an ihrem jeweiligen Ort auftretenden Kräften in proportionale elektrische Signale dienen, und mit einer Koppeleinrichtung (508) zur Erzeugung von Ausgangssignalen aus den proportionalen elektrischen Signalen, dadurch gekennzeichnet, daß die Koppeleinrichtung Bandpaß-Filtercharakteristik besitzt, wodurch die gemeinsamen Dynaimkeigenschaften im erwarteten Bereich von auf die Fläche ausgeübten Kräften in den Ausgangssignalen betont werden.

2. System nach Anspruch 1 mit einer Verarbeitungseinrichtung (512), die aus den Ausgangssignalen die Koordinaten des Punktes bestimmt, an dem die lokalisierte Kraft ausgeübt wird.

3. System nach Anspruch 2, bei dem die Verarbeitungseinrichtung eine Abtastsammelschaltung (510 und 511) zum Ansammeln von Ausgangssignal-Abtastwerten während der Ausübung der lokalisierten Kraft enthält.

4. System nach Anspruch 3, bei dem die Abtastsammelschaltung zur Minimierung der Einflüsse durch Quantisierungsfehler und Rauschen die Abtastwerte mit einer Rate ansammelt, die wesentlich höher als die höchste Rate ist, mit der die lokalisierte Kraft wiederholt auf die Fläche ausübbar ist.

5. System nach Anspruch 3 oder 4, bei dem die Abtastsammelschaltung die Abtastwerte während der Ausübung der lokalisierten Kraft ansammelt, bis entweder ein bestimmtes Zeitintervall abgelaufen ist oder eine bestimmte Nullkreuzung des Ausgangssignals festgestellt wird, je nachdem, welches Ereignis zuerst eintritt.

6. System nach Anspruch 2, 3, 4 oder 5, bei dem die Verarbeitungseinrichtung eine Berechnungsschaltung (512a) zur Berechnung mittlerer Bezugspegel für jeden Kraftsensor und einen Speicher (512b) zur zeitweiligen Speicherung der mittleren Bezugswerte aufweist.

7. System nach Anspruch 6, bei dem die mittleren Bezugswerte einen Ruhezustand der Kraftsensoren darstellen.

8. ystem nach Anspruch 7, bei dem die Berechnungsschaltung vor dem Ausüben der lokalisierten Kraft neue mittlere Bezugspegel für jeden Kraftsensor erzeugt.

9. System nach Anspruch 6, 7 oder 8 mit einer Multiplexerschaltung (510) zur Ansammlung von Antastwerten, die das Ausgangssignal jedes Kraftsensors darstellen, und mit einem Analog-Digitalwandler (504), der unter Ansprechen auf das Ausgangssignal der Multiplexerschaltung die Abtastwerte in ein digitales Ausgangssignal umwandelt, wobei die Berechnungsschaltung (512a) einen Mittelwert des digitalen Ausgangssignals bildet, bevor sie die Koordinatenwerte des Punktes errechnet, an dem die Kraft ausgeübt wird.

**Revendications**

1. Un système destiné à déterminer la position d'une force localisée appliquée sur une surface, comprenant un ensemble de dispositifs de détection de force (501) prévus pour être associés à la surface, chaque dispositif de détection ayant pour fonction de convertir des forces à sa position en signaux électriques proportionnels, et des moyens de couplage (508) destinés à produire des signaux de sortie à partir des signaux électriques proportionnels, caractérisé en ce que les moyens de couplage ont une caractéristique de filtre passe-bande qui a pour effet d'accentuer dans les signaux de sortie les caractéristiques dynamiques communes de la plage de forces dont on prévoit l'application à la surface.

2. Un systèm selon la revendication 1, comprenant un système de traitement (512) destiné à déterminer à partir des signaux de sortie les coordonnées du point d'application de la force localisée.

3. Un système selon la revendication 2, dans lequel le système de traitement comprend un circuit de collecte d'échantillons (510 et 511) destiné à collecter des échantillons des signaux de sortie pendant l'application de la force localisée.

4. Un système selon la revendication 3, dans lequel le circuit de collecte d'échantillons a pour fonction de collecter les échantillons à une cadence très supérieure à la cadence la plus élevée à laquelle la force localisée peut être appliquée de façon répétée à la surface, pour minimiser les effets de l'erreur de quantification et du bruit.

5. Un système selon la revendication 3 ou 4, dans lequel le circuit de collecte d'échantillons a pour fonction de collecter des échantillons pendant l'application de la force localisée, soit jusqu'à l'expiration d'un intervalle de temps particulier, soit jusqu'à la détection d'un passage par zéro particulier du signal de sortie, l'événement qui est pris en considération étant celui qui se produit le premier.

6. Un système selon la revendication 2, 3, 4 ou 5, dans lequel le système de traitement comprend un circuit de calcul (512a) destiné à calculer des niveaux de référence moyens pour chaque dispositif de détection de force, et une mémoire (512b) destinée à l'enregistrement temporaire de ces niveaux de référence moyens.

7. Un système selon la revendication 6, dans lequel les niveaux de référence moyens représentent un état de repos des dispositifs de détection de force.

8. Un système selon la revendication 7, dans lequel le circuit de calcul a pour fonction d'établir de nouveaux niveaux de référence moyens pour chaque dispositif de détection de force, avant l'application de la force localisée.

9. Un système selon la revendication 6, 7 ou 8, comprenant un circuit multiplexeur (510) destiné à collecter des échantillons de signal représentatifs du signal de sortie de chaque dispositif de détection de force, et un convertisseur analogique-numérique (504) qui réagit au signal de sortie du circuit multiplexeur en convertissant les échantillons en un signal de sortie numérisé, le circuit de calcul (512a) ayant pour fonction de faire la moyenne du signal de sortie numérisé avant de calculer les valeurs de coordonnées du point d'application de la force localisée.

FIG. 1

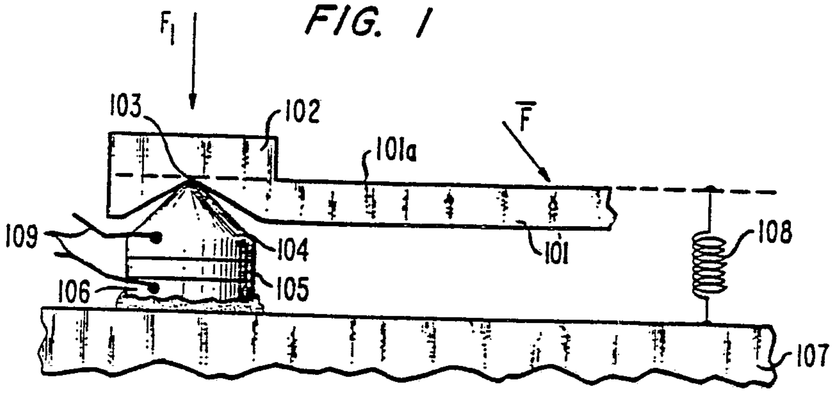


FIG. 2

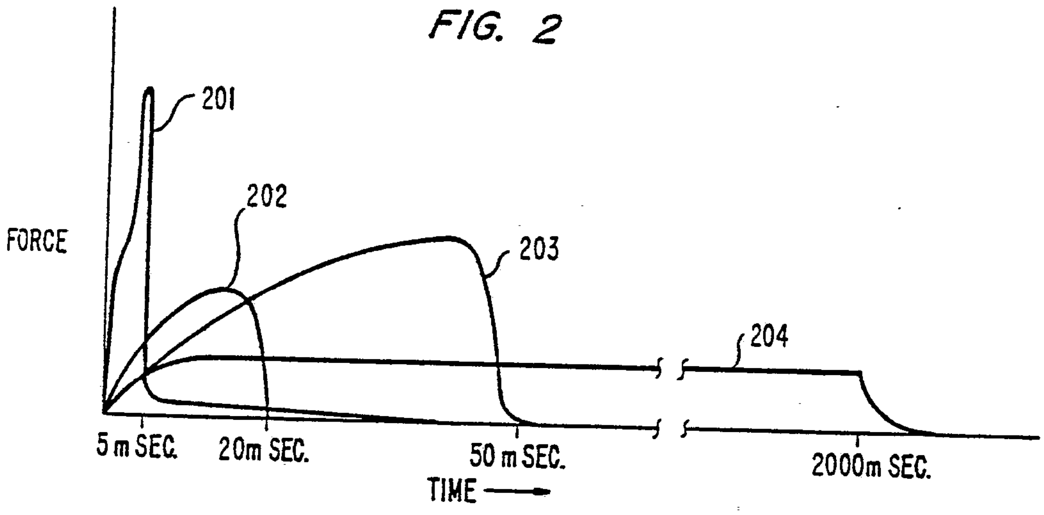


FIG. 3

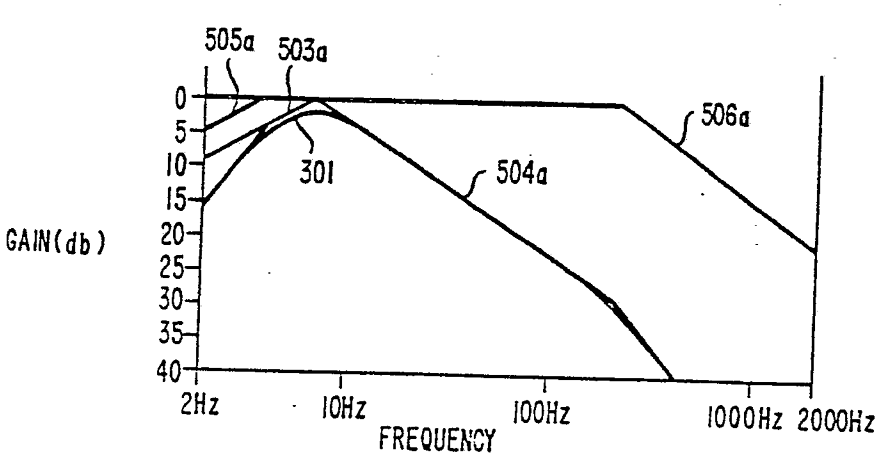

FIG. 4

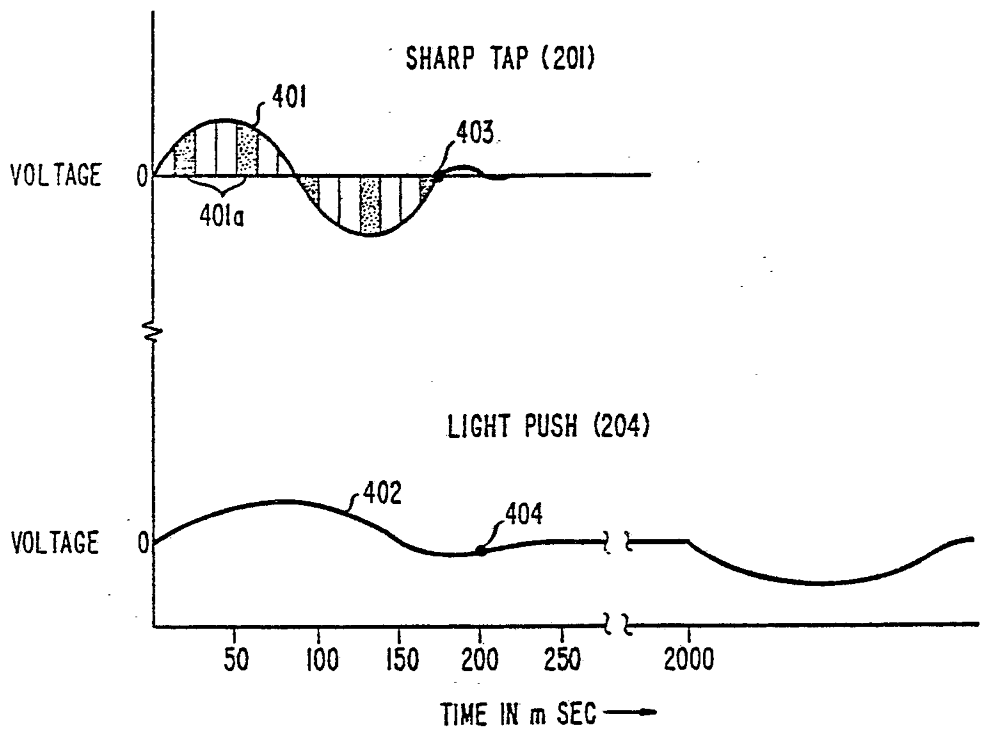
SHARP TAP (201)
401
403
VOLTAGE
0
401a
LIGHT PUSH (204)
402
404
VOLTAGE
0
50
100
150
200
250
2000
TIME IN m SEC

FIG. 6

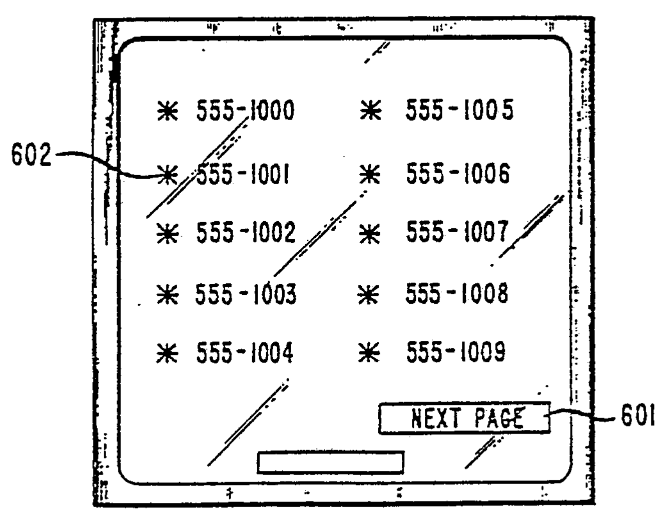
555-1000
555-1005
602
555-1001
555-1006
555-1002
555-1007
555-1003
555-1008
555-1004
555-1009
NEXT PAGE
601

FIG. 5

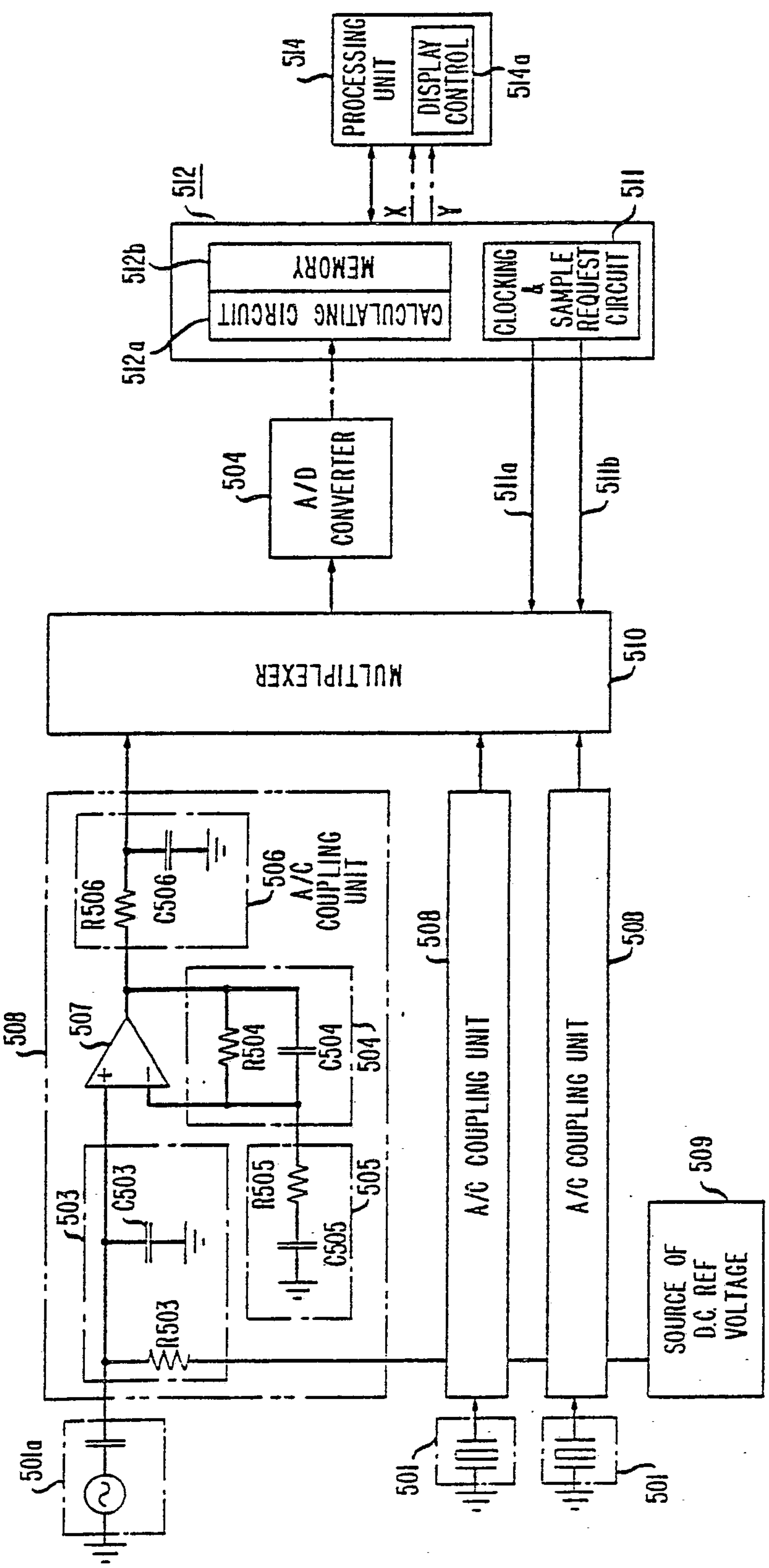
PROCESSING UNIT
DISPLAY CONTROL
514
514a
512
X
Y
MEMORY
CALCULATING CIRCUIT
512b
512a
CLOCKING & SAMPLE REQUEST CIRCUIT
511
A/D CONVERTER
504
511a
511b
MULTIPLEXER
510
508
507
R506
C506
506
A/C COUPLING UNIT
R504
C504
504
503
C503
R505
505
C505
R503
A/C COUPLING UNIT
A/C COUPLING UNIT
508
508
509
SOURCE OF D.C. REF VOLTAGE
501a
501
501

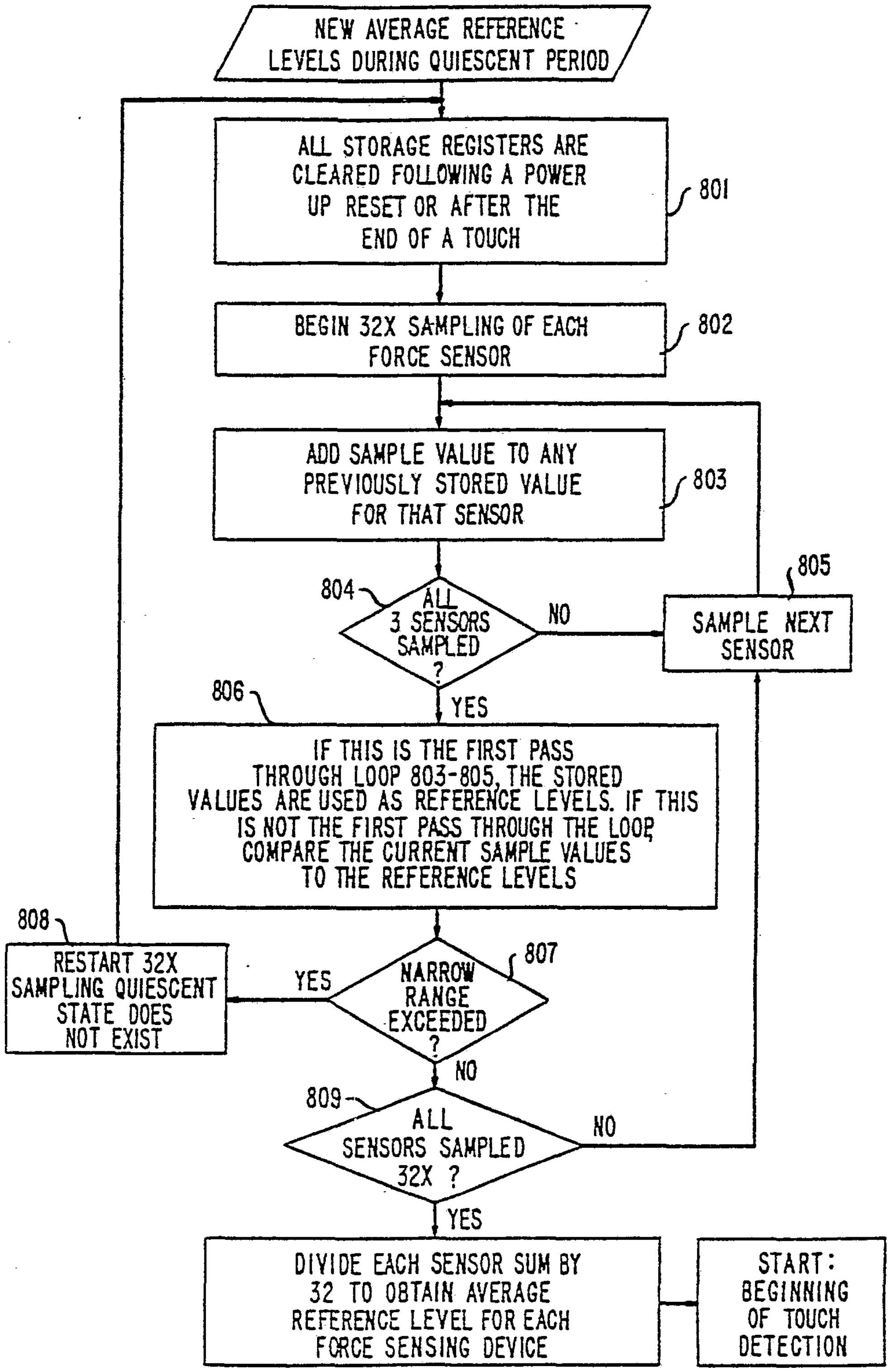
NEW AVERAGE REFERENCE LEVELS DURING QUIESCENT PERIOD
ALL STORAGE REGISTERS ARE CLEARED FOLLOWING A POWER UP RESET OR AFTER THE END OF A TOUCH
801
BEGIN 32X SAMPLING OF EACH FORCE SENSOR
802
ADD SAMPLE VALUE TO ANY PREVIOUSLY STORED VALUE FOR THAT SENSOR
803
804
ALL 3 SENSORS SAMPLED ?
NO
805
SAMPLE NEXT SENSOR
YES
806
IF THIS IS THE FIRST PASS THROUGH LOOP 803-805, THE STORED VALUES ARE USED AS REFERENCE LEVELS. IF THIS IS NOT THE FIRST PASS THROUGH THE LOOP, COMPARE THE CURRENT SAMPLE VALUES TO THE REFERENCE LEVELS
808
RESTART 32X SAMPLING QUIESCENT STATE DOES NOT EXIST
YES
NARROW RANGE EXCEEDED ?
807
NO
809
ALL SENSORS SAMPLED 32X ?
NO
YES
DIVIDE EACH SENSOR SUM BY 32 TO OBTAIN AVERAGE REFERENCE LEVEL FOR EACH FORCE SENSING DEVICE
START: BEGINNING OF TOUCH DETECTION

*FIG. 7*

FIG. 8

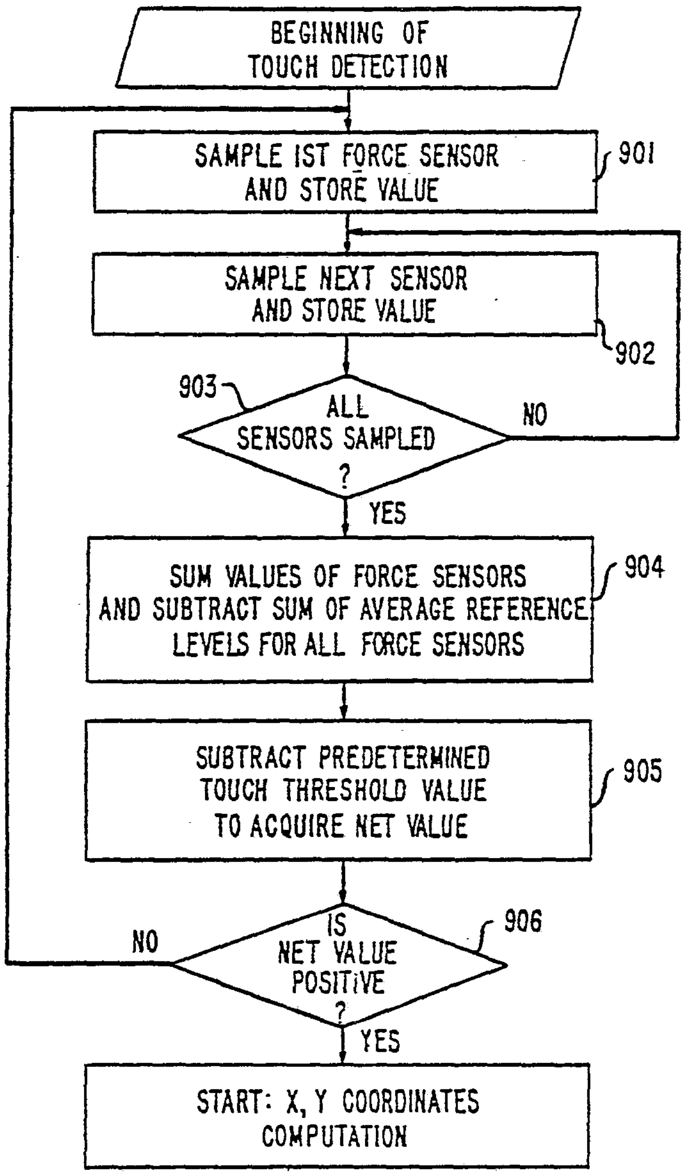
BEGINNING OF
TOUCH DETECTION
SAMPLE IST FORCE SENSOR
AND STORE VALUE
901
SAMPLE NEXT SENSOR
AND STORE VALUE
902
903
ALL
SENSORS SAMPLED
?
NO
YES
SUM VALUES OF FORCE SENSORS
AND SUBTRACT SUM OF AVERAGE REFERENCE
LEVELS FOR ALL FORCE SENSORS
904
SUBTRACT PREDETERMINED
TOUCH THRESHOLD VALUE
TO ACQUIRE NET VALUE
905
IS
NET VALUE
POSITIVE
?
906
NO
YES
START: X, Y COORDINATES
COMPUTATION

FIG. 9

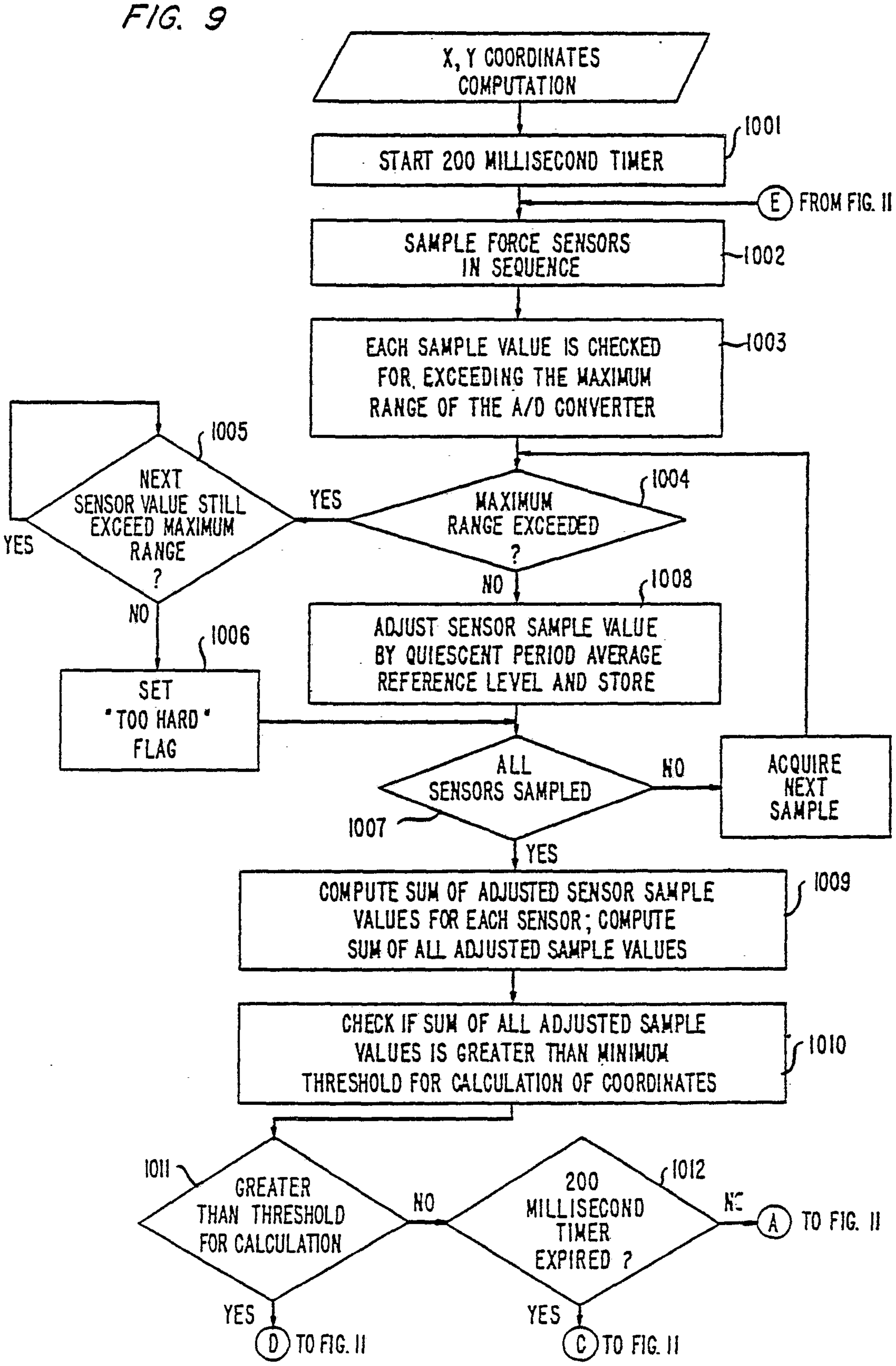
X, Y COORDINATES COMPUTATION
1001
START 200 MILLISECOND TIMER
E FROM FIG. II
SAMPLE FORCE SENSORS IN SEQUENCE
1002
EACH SAMPLE VALUE IS CHECKED FOR EXCEEDING THE MAXIMUM RANGE OF THE A/D CONVERTER
1003
1005
NEXT SENSOR VALUE STILL EXCEED MAXIMUM RANGE ?
YES
YES
1004
MAXIMUM RANGE EXCEEDED ?
NO
NO
1008
ADJUST SENSOR SAMPLE VALUE BY QUIESCENT PERIOD AVERAGE REFERENCE LEVEL AND STORE
1006
SET "TOO HARD" FLAG
ALL SENSORS SAMPLED
NO
ACQUIRE NEXT SAMPLE
1007
YES
COMPUTE SUM OF ADJUSTED SENSOR SAMPLE VALUES FOR EACH SENSOR; COMPUTE SUM OF ALL ADJUSTED SAMPLE VALUES
1009
CHECK IF SUM OF ALL ADJUSTED SAMPLE VALUES IS GREATER THAN MINIMUM THRESHOLD FOR CALCULATION OF COORDINATES
1010
1011
GREATER THAN THRESHOLD FOR CALCULATION
NO
200 MILLISECOND TIMER EXPIRED ?
1012
A TO FIG. II
YES
D TO FIG. II
YES
C TO FIG. II

FIG. 10

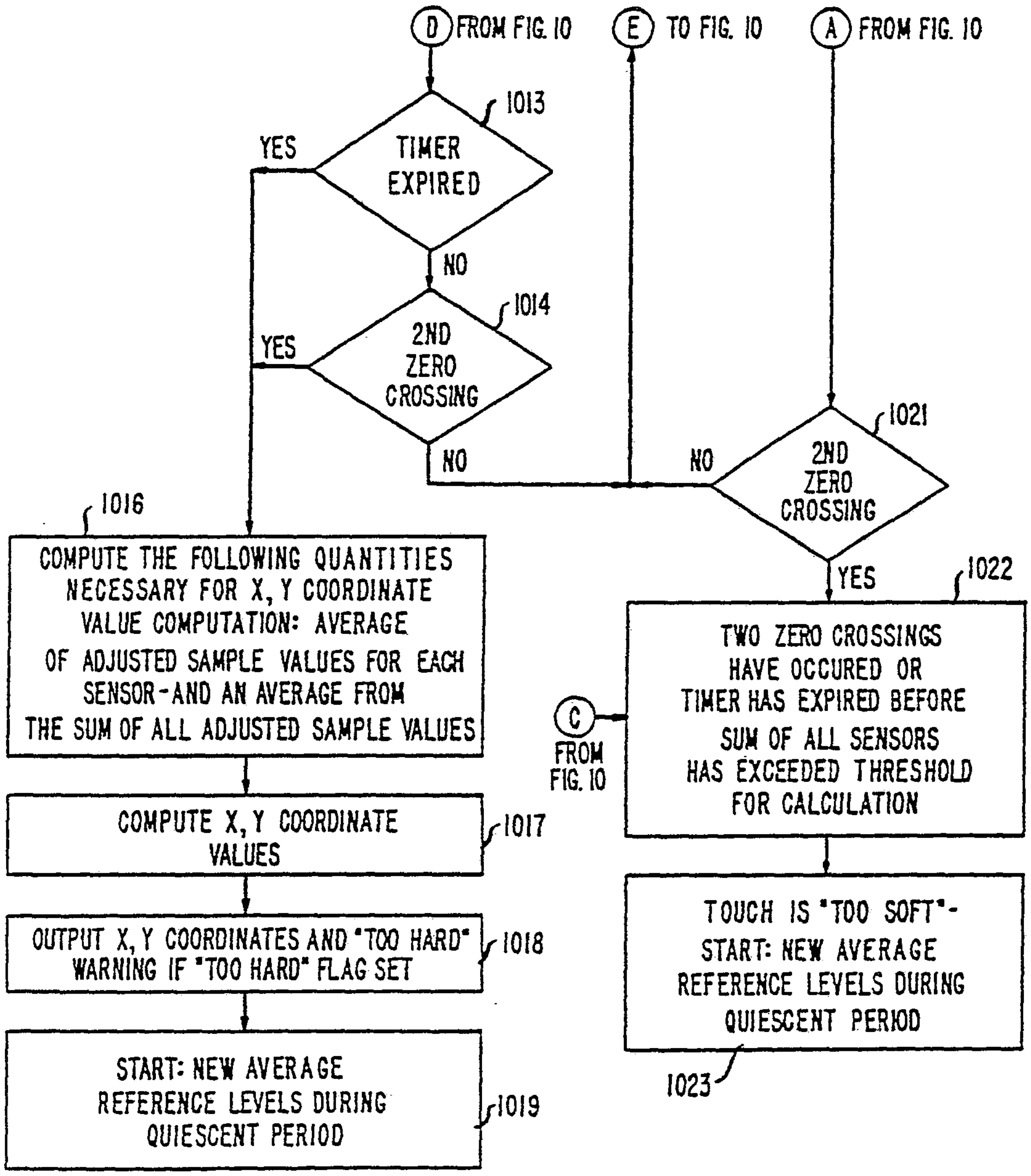

D FROM FIG. 10
E TO FIG. 10
A FROM FIG. 10
1013
TIMER EXPIRED
YES
NO
1014
2ND ZERO CROSSING
YES
NO
1021
2ND ZERO CROSSING
NO
YES
1016
COMPUTE THE FOLLOWING QUANTITIES NECESSARY FOR X, Y COORDINATE VALUE COMPUTATION: AVERAGE OF ADJUSTED SAMPLE VALUES FOR EACH SENSOR-AND AN AVERAGE FROM THE SUM OF ALL ADJUSTED SAMPLE VALUES
1022
TWO ZERO CROSSINGS HAVE OCCURED OR TIMER HAS EXPIRED BEFORE SUM OF ALL SENSORS HAS EXCEEDED THRESHOLD FOR CALCULATION
C FROM FIG. 10
COMPUTE X, Y COORDINATE VALUES
1017
OUTPUT X, Y COORDINATES AND "TOO HARD" WARNING IF "TOO HARD" FLAG SET
1018
TOUCH IS "TOO SOFT"- START: NEW AVERAGE REFERENCE LEVELS DURING QUIESCENT PERIOD
1023
START: NEW AVERAGE REFERENCE LEVELS DURING QUIESCENT PERIOD
1019